(19) Europäisches Patentamt

European Patent Office

Office européen des brevets

(11) Publication number: **0 204 147 B1**

(12) **EUROPEAN PATENT SPECIFICATION**

(45) Date of publication of patent specification: **29.07.92** (51) Int. Cl.⁵: **G06F 15/20**

(21) Application number: **86105964.0**

(22) Date of filing: **30.04.86**

(54) **Word processor capable of automatic titling of documents.**

(30) Priority: **01.05.85 US 729309**

(43) Date of publication of application:
**10.12.86 Bulletin 86/50**

(45) Publication of the grant of the patent:
**29.07.92 Bulletin 92/31**

(84) Designated Contracting States:
**DE FR GB**

(56) References cited:
**EP-A- 0 052 711**
**DE-A- 3 418 410**
**DE-A- 3 421 919**
**US-A- 4 491 933**

(73) Proprietor: **Minolta Camera Kabushiki Kaisha**
**Osaka Kokusai Building 30, Azuchi-machi**
**2-chome**
**Higashi-ku Osaka 541(JP)**

(72) Inventor: **Caruso, Jeffrey L.**
**229 Lexington Rd**
**Concord Massachusetts(US)**
Inventor: **Johnson, Theodore C.**
**666 Main St. No. 204**
**Winchester Massachusetts(US)**

(74) Representative: **Glawe, Delfs, Moll & Partner**
**Patentanwälte**
**Rothenbaumchaussee 58 Postfach 2570**
**W-2000 Hamburg 13(DE)**

**Description**

BACKGROUND OF THE INVENTION

The present invention relates to a word processor for producing and editing documents.

Conventionally, in the case of production of documents by using word processors, it has been so arranged that the documents inputted from a keyboard are temporarily stored in a memory and then, are edited for correction thereof, etc. so as to be printed by a printer. A plurality of the documents are stored in a recording medium, for example, a floppy disk. In order to control a plurality of the documents, a title is put to each document. Furthermore, titles of the documents and access data for files in the recording medium are stored in a predetermined area (a directory file) of the recording medium, with the files corresponding to the documents, respectively.

An operating system of a host computer for controlling a word processor includes a document control program for performing processing of registration, change, deletion, etc. of the titles of the documents. In document control of the known word processors, prior to or after production of a new document and prior to storage of the new document in the recording medium, a title is required to be put to the new document as it is described in US-A 4 491 933. In the case where the title is put to the new document prior to production of the new document, the new document cannot be produced unless the title is put to the new document. On the other hand, in the case where the title is put to the new document after production of the new document, the document cannot be stored in the recording medium unless the title is put to the new document. Furthermore, in the latter case, when other operations are performed without putting the title to the new document, the produced new document will be erased.

It is therefore an object of the invention to provide an improved word processor which enables automatic production of a title of a new document at the time of production of the new document regardless of the type of information entered by the keyboard.

This object is achieved by a word processor as defined in claim 1; the dependent claims are related to further developments of the invention.

In accordance with the present invention, in the case where a document is produced, a title of the document is automatically generated from a portion of the document even if an operator does not input the title or failes to input the title.

The inventors have found that operations of the word processors are fundamentally composed of repetitions of a step of producing and editing the documents, a step of storing the documents and a step of displaying the documents and a step of displaying a table of the documents and designating the documents. Therefore, if storage of the documents (in the case of a new document, the title is automatically generated) and display of the table of the documents are executed simultaneously the above described steps can be performed rather smoothly. Furthermore, as automatic generation of the title of the new document and storage of the documents are performed simultaneously during operations followed by storage of the documents, for example, an operation for completing production and editing of the document, operations of the word processor becomes easier.

As according to the invention a title of the document is generated automatically by picking out a character string which occupies a predetermined portion of the document it is assured that each document gets a title even if no title is inputted.

BRIEF DESCRIPTION OF THE DRAWINGS

This object and features of the present invention will become apparent from the following description taken in conjunction with the preferred embodiment thereof with reference to the accompanying drawings, in which:

Fig. 1 is a flowchart showing automatic production of document titles in a word processor (Fig. 2) according to the present invention;

Fig. 2 is a perspective view of the word processor according to the present invention;

Fig. 3 is a block diagram showing an internal configuration of the word processor of Fig. 2;

Fig. 4 is a flowchart showing production of documents in the word processor of Fig. 2;

Fig. 5 is a flowchart showing input of the document titles in the word processor of Fig. 2;

Figs. 6 to 8 are views showing one example of automatic production of the document titles displayed on a screen of the word processor of Fig. 2;

Figs. 9 and 10 are views similar to Figs. 6 to 8, particularly showing another example of automatic production of the document titles;

2

Figs. 11 and 12 are views similar to Figs. 9 and 10, respectively, particularly showing input of the document titles;

Fig. 13 is a view indicative of one example of a tree structure of the document titles;

Fig. 14 is a view indicative of one example of a table of the document titles on the screen; and

Figs. 15A and 15B are flow charts similar to Fig. 4, particularly showing a modification thereof.

Before the description of the present invention proceeds, it is to be noted that like parts are designated by like reference numerals throughout several views of the accompanying drawings.

## DETAILED DESCRIPTION OF THE INVENTION

Hereinbelow, a word processor K according to one preferred embodiment of the present invention will be described in the sequence of (a) Configuration of word processor, (b) Configuration of host computer, (c) Document control, (d) Automatic registration of document title and (e) Example of automatic registration of document title.

(a) Configuration of word processor

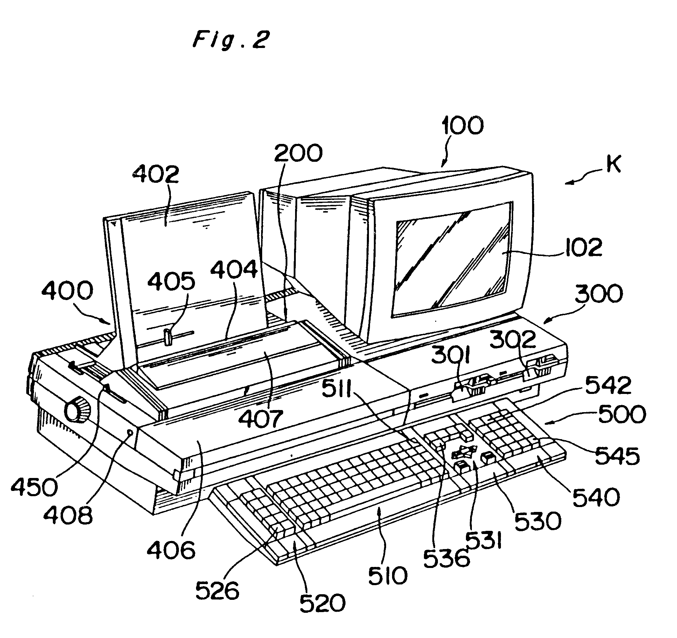

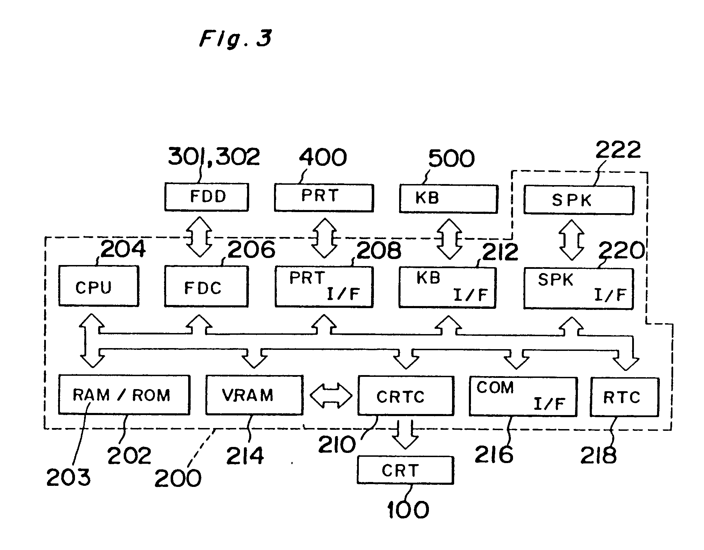

Fig. 2 shows an external appearance of the word processor K according to one preferred embodiment of the present invention. The word processor K includes a keyboard 500 acting as an external input device, a host computer 200 (Fig. 3) provided with a power source and electronic parts such as a central processing unit (CPU), a read-only memory (ROM), a random access memory (RAM), etc., a main body 300 provided with floppy disk drives 301 and 302 acting as external memories, a display unit 100 and a daisy wheel type printer 400 acting as an external output device.

More specifically, a main switch (not shown) and the floppy disk drives 301 and 302 acting as the external memories are provided in the main body 300 and are operated directly by an operator. In the display unit 100, there are provided a brightness adjusting knob (not shown) operated directly by the operator and a cathode-ray tube (CRT) screen 102 for displaying an input from the keyboard 500. On an operating face of the keyboard 500, there are provided character keys 510 for inputting alphanumeric characters as in a general typewriter, function keys 520 assigned to special commands in a state of loading of a program of the word processor K, operational keys 530 for performing various operations, and ten keys 540 for inputting numerals, etc.

In connection with description of the word processor K, the function keys 520 include a document storage key 526 to be depressed at the time of storage of documents, while the character keys 510 include a Back Space key 511 for returning inputted characters backwardly by one space. Meanwhile, the operational keys 530 include a Cancel key 536 for canceling operations and a cursor key 531 for displacing a cursor on the CRT screen 102 in the state of loading of the program of the word processor K. Furthermore, the ten keys 540 include a Files key 542 for displaying a document title and a folder title on the CRT screen 102 and an Enter key 545 to be depressed at the time of completion of operations.

Meanwhile, the daisy wheel type printer 400 includes a paper board 402 for sliding print papers thereon, a paper guide 405 for positioning the print papers at the time of insertion of the print papers into the printer 400, a front cover 406, a silent cover 407 for a sound insulation purpose, a visor 404 for preventing reflection of light, a bail lever 450 acting, not only as a switch for effecting semi-automatic insertion of the print papers into the printer 400, but as a paper holder for holding the print papers during printing thereof, etc.

Then, actual procedures for producing the documents in the word processor K will be described, hereinbelow.

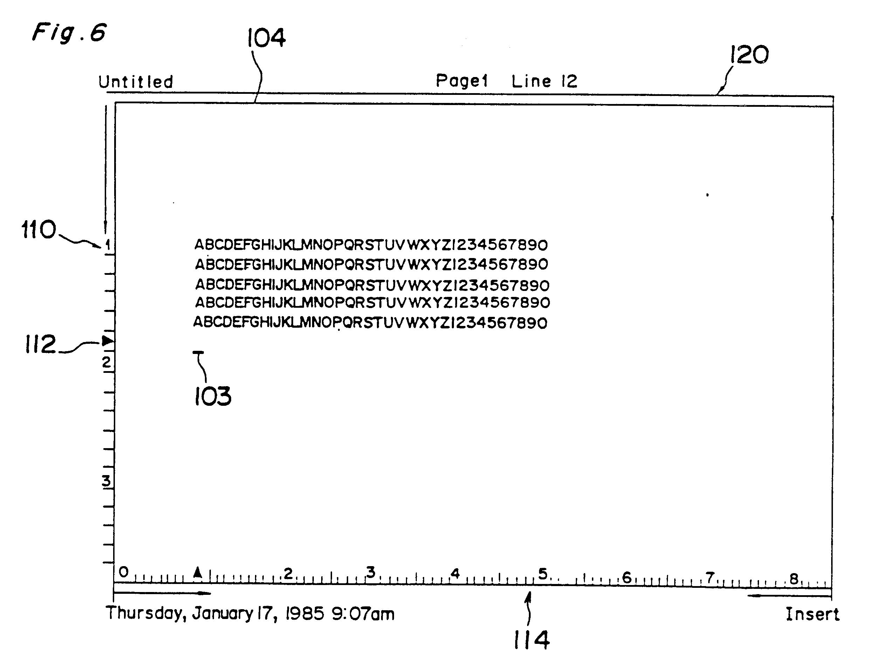

Initially, in a state of turning off of the power source, a system disk containing the program of the word processor K and a data disk for storing contents of the produced documents are, respectively, inserted into the floppy disk drives 301 and 302. Then, the main switch of the main body 300 is turned on such that the host computer 200 incorporated in the main body 300 is caused to read the contents of the system disk inserted into the floppy disk drive 301. When the contents of the program of the word processor K have been loaded into the host computer 200, a printable space is displayed by a frame 104 on the CRT screen 102 of the display unit 100 and a cursor 103 (Fig. 6) is displayed at a left end of a print start top line of the frame 104 as will be described later. When the character keys 510 of the keyboard 500 are depressed in this state, the inputted characters are each displayed, at the position indicated by the cursor 103, on the CRT screen 102.

(b) Configuration of host computer

Hereinbelow, configuration of the host computer 200 including an ROM/RAM memory 202 and a CPU 204 and input-output processing of signals between data in the ROM/RAM memory 202 and the CPU 204 will be described with reference to Fig. 3. The CPU 204 is a so-called microcomputer for performing operational processing. Since registers, input/output ports, etc. of the CPU 204 and their functions are well known, description thereof is abbreviated for the sake of brevity. The host computer 200 further includes a floppy disk controller (FDC) 206 for controlling inputs and outputs of the floppy disk drives 301 and 302, an input-output interface (hereinbelow, referred to as an "RT I/F") 208 to the printer 400, and a CRT controller 210 acting as an output interface to the display unit 100. The CRT controller 210 is connected to a video memory (hereinbelow, referred to as a "VRAM") 214.

Furthermore, the host computer 200 includes a keyboard interface (hereinbelow, referred to as a "KB I/F") 212 acting as an input/output interface to the keyboard 500, an input/output interface (hereinbelow, referred to as a "COM I/F") 216 to external devices, a clock (hereinbelow, referred to as an "RTC") 218 for indicating real time and an input/output interface (hereinbelow, referred to as an "SPK I/F") 220 to a loudspeaker 222 for generating warning sounds (error sounds).

Initially, when the main switch of the main body 300 is turned on in the state where the system disk and the data disk have been, respectively, inserted into the floppy disk drives 301 and 302, the CPU 204 stores, through the FDC 206, the contents of the system disk in an RAM 203 of the RAM/ROM memory 202 in accordance with the program of the word processor K. Input signals from the keyboard 500 are applied, through the KB I/F 212, to the CPU 204. Subsequently, the CPU 204 performs processing in accordance with the contents of a storage area of the RAM/ROM memory 202 for storing a screen editing routine so as to apply, via the CRT controller 210, inputs to the display unit 100 such that the inputs applied to the display unit 100 are displayed on the CRT screen 102. The input signals from the keyboard 500 are sequentially stored in the RAM 203.

(c) Document control

A directory for controlling the stored documents is stored in each diskette. A title, a level (a hierarchy of a tree structure of each document), the number of the contents (the number of pages), a date of production and a date of updating of each document, an access data for the directory file for storing the documents, etc. are recorded in the directory file. When the Files key 542 of the keyboard 500 is depressed, a table (a Files screen) regarding the title, the date of production, the data of updating, etc. of each document stored in the directory is displayed on the CRT screen 102. Meanwhile, in the word processor K, when the Files key 542 has been depressed, the contents of both groups (folders) each comprising a plurality of the documents and the independent documents are displayed on the CRT screen 102.

(d) Automatic registration of document title

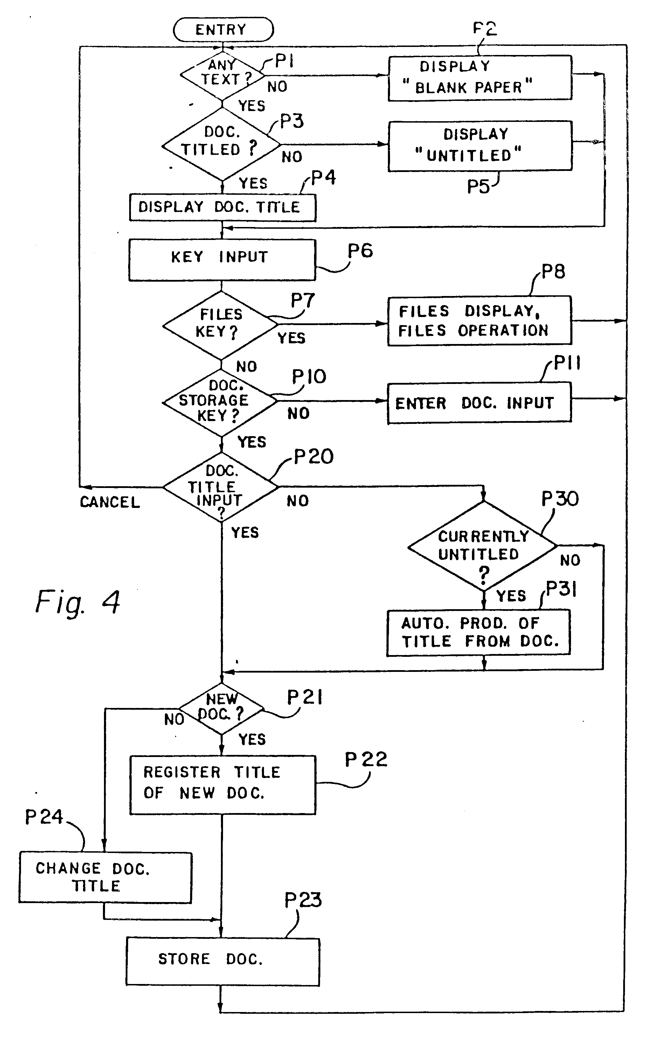

When the documents are input to the word processor K, the CPU 204 performs various processings in accordance with the contents of the storage area of the RAM/ROM memory 202 for storing the screen editing routine. In connection with automatic registration of the document title, the processing of inputting the documents to the word processor K will be described with refrence to a flowchart of Fig. 4, hereinbelow.

Upon entry, a decision is made at step P1 as to whether any text of any information from the keyboard exists including symbols other than alphanumeric symbols. If no text exists in memory, then the screen indicates a blank paper at step P2, if any text exists, then a determination is made at step P3 as to whether the document identifying the text has already been titled. If it has been titled, then the document title is displayed on the screen, step P4, if no title exists, then the document is automatically defined as untitled and displayed as such at step P5.

When a key input is applied to the keyboard 500 at step P6, a decision is made at step P7 as to whether or not the Files key 542 has been depressed. In the case of "YES" at step P7, the table (Files screen) showing the documents stored in a recording medium (a diskette) in use is displayed on the CRT screen 102 and sorting of the documents, etc. is performed if necessary at step P8.

In case of "NO" at step P7, a decision is made at step P10 as to whether or not the document storage key 526 has been depressed. In case of "NO" at step P10, since characters, etc. of a document have been input to the keyboard 500, the document input is edited at step P11. In case of "YES" at step P7, the document title is produced if necessary and then, is registered in the directory such that the document is stored in the floppy disk in the following procedure. Namely, the document title is input to the keyboard 500 at step P20. Then, a decision is made at step P21 as to whether or not the document is a new document, namely, whether or not the title has been registered in the directory. In case of "YES" at step P21, the title of the new document is produced so as to be registered in the directory at step P22. Thereafter, the document is stored in the floppy disk P23 and then, the program flow returns to step P1 in a waiting state for waiting for the next key input. In the case of "NO" at step P21, the title of the document is changed at step P24 and then, the document is stored in the floppy disk at step P23. Meanwhile, when the Cancel key 536 has been depressed during input of the document title, input of the document title is suspended and then, the program flow returns to step P1 in the waiting state for waiting for the next key input.

Thereafter, in case of "NO" at step P20, a decision is made at step P30 as to whether or not the document is a new document. In case of "YES" at step P30, a title is automatically produced from the document at step P31 as will be described later in detail and then, step P21 follows. Since the title is automatically produced from a predetermined number of alphanumeric characters of the document at this time, one will be able to easily recall the contents of the documents when he would look at the title later. Furthermore, even if he fails to input the document title, the document is not erased. This automatic registration of the document title is an essential feature of the present invention. In the case of "NO" at step P30, since the document title has been already registered, the program flow proceeds to step P21.

If no alphanumerical characters have been entered in the document, then the subroutine of automatically producing a title from a predetermined number of alphanumerical characters cannot be executed at step P31. However, the document has already been titled as "Untitled" at step P5 and continues to carry this title message as indicative of a document with alphanumerical characters unavailable.

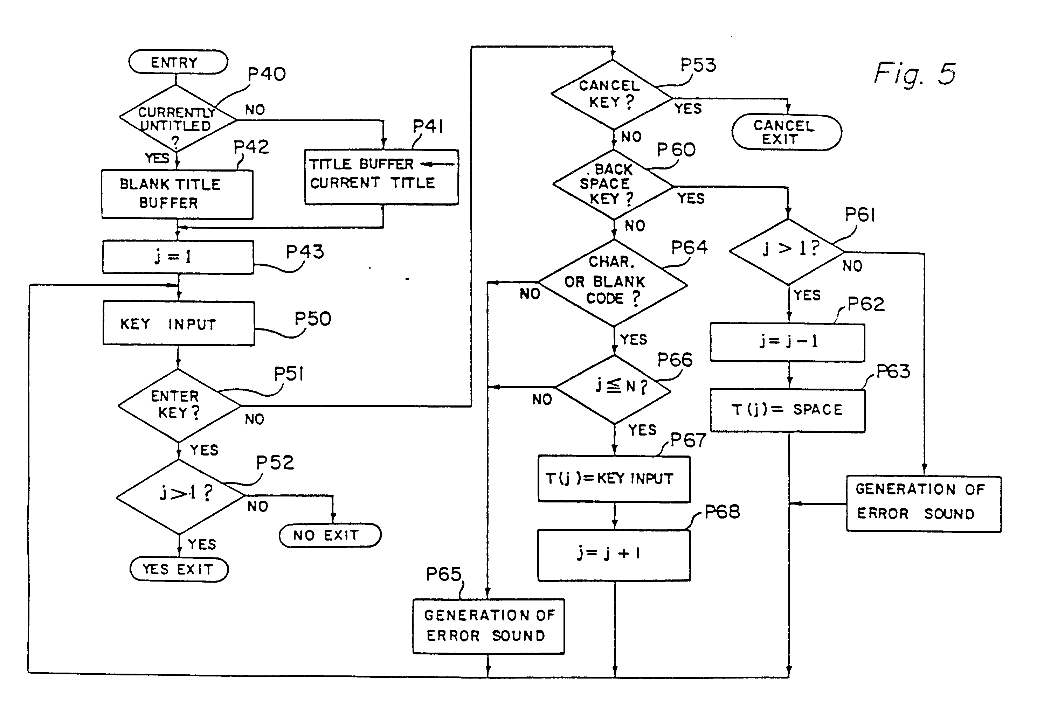

Hereinbelow, input of the document title (step P20) will be described in detail with reference to a flowchart of Fig. 5. In Fig. 5, characters j and $T(j)$ represent an index of a title buffer T and a j-th character of the title buffer T, respectively. Initially, a decision is made at step P40 as to whether or not the document under processing is lacking a formal title. In case of "NO" at step P40, the title of the old document is input to the title buffer T and is displayed on the CRT screen 102 at step P41. In case of "YES" at step P40, the title buffer T is blanked at step P42. Then, an index j is set at 1, namely, the index j is initialized at step P43 and then, step P50 for applying a key input to the board 500 follows.

When the key input is applied to the keyboard 500 at step P50, a decision is made at step P51 as to whether or not the Enter key 545 has been depressed. In the case of "YES" at step P51, a decision is made at step P52 as to whether or not the index j is larger than 1. In the case of "YES" at step P52, since input of the title has been completed, the program flow proceeds to step P21 of Fig. 4. In the case of "NO" at step P52, since input of the title has not been performed, the program flow proceeds to step P30 of Fig. 4.

Meanwhile, in the case of "NO" at step P51, a decision is made at step P53 as to whether or not the Cancel key 536 has been depressed. In the case of "YES" at step P53, input of the document title is suspended and then, the program flow proceeds to step P1 of Fig. 4. Thus, even after the document storage key 526 has been depressed erroneously, it is possible to cancel input of the document storage key 526.

In the case of "NO" at step P53, the title can be manually inputted to the keyboard 500 in the following procedure. Firstly, a decision is made at step P60 as to whether or not the Back Space key 511 has been depressed. In the case of "YES" at step P60, a decision is made at step P61 as to whether or not the index j is larger than 1. In the case of "NO" at step P61, since input of the title has not yet been performed, the program flow proceeds to step P50 for applying the key input to the keyboard 500 and an error sound is generated. Meanwhile, in case of "YES" at step P61, 1 is subtracted from the index j at step P62 and then, a space is input to the character $T(j)$ so as to be displayed on the CRT screen 102 at step P63 followed by step P50.

Meanwhile, in case of "NO" at step P60, a decision is made at step P64 as to whether or not the key input of a character code or a blank code has been applied to the keyboard 500. In case of "NO" at step P64, an error sound is generated at step P65 and then, step P50 follows. In case of "YES" at step P64, a decision is made at step P66 as to whether or not the index j is equal to or less than the maximum value N. In case of "NO" at step P66, since the index j exceeds the maximum value N, the error sound is generated at step P65 followed by step P50. In case of "YES" at step P66, the key input is applied to the character $T(j)$ at step P67 and then, 1 is added to the index j at step P68. Supposing that a character N represents a maximum value of the number of the characters of the document title, the maximum value N is set at 33 in this embodiment of the present invention.

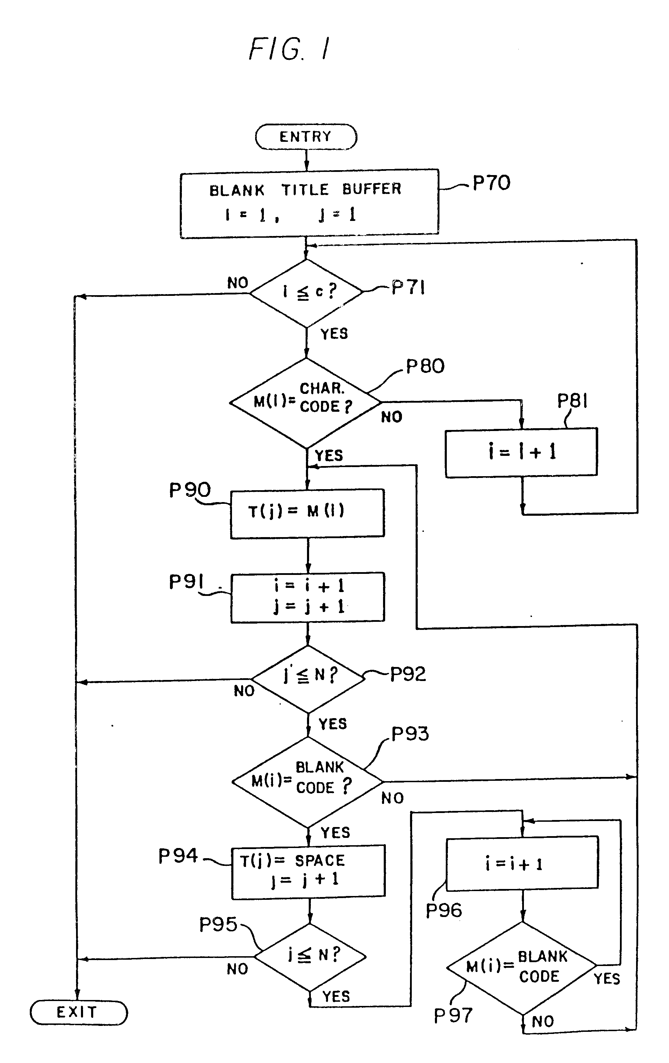

Hereinbelow, automatic registration (step P31 of Fig. 4) of the title from the document will be described in detail with reference to a flowchart of Fig. 1. In Fig. 1, characters i and $M(i)$ represent an index of a document memory M and an i-th character of the document memory M, respectively. Initially, at step P70, the title buffer T is blanked and then, the index i of the document memory M and the index j of the title buffer T are set at 1 for initialization thereof. Thereafter, a decision is made at step P71 as to whether or not the index i is less than or equal to the number C of characters on the current page. In case of "NO" at step P71, since there are no alphanumeric characters available, no title is produced and the program flow proceeds to step 21 of diagram 4.

Thereafter, a decision is made at step 80 as to whether or not the character M(i) is a character code. In case of "NO" at step P80, 1 is added to the index i at step P81 and then, the program flow returns to step P80 such that a first letter of the document is detected.

Then, 33 characters are input to the title buffer T. Namely, firstly, the character M(i) is input to the character T(j) at step 90 and then, 1 is added to the indexes i and j at step P91. Thereafter, a decision is made at step P92 as to whether or not the index j is equal to or less than the maximum value N. In case of "NO" at step P92, since the title has been produced, the program flow proceeds to step P21 of Fig. 4. Meanwhile, in case of "YES" at step P92, a decision is made at step P93 as to whether or not the next character M(i) of the document is one of blank codes such as space codes, tabulation codes, line feed codes, etc. In case of "NO" at step P93, the program flow returns to step P90.

Meanwhile, in case of "YES" at step P93, a space is input to the character T(j) and 1 is added to the index j at step P94. Then, a decision is made at step P95 as to whether or not the index j is equal to or less than the maximum value N. In the case of "NO" at step P95, since the title has been produced, the program flow proceeds to step P21 of Fig. 4. Meanwhile, in the case of "YES" at step P95, 1 is added to the index i at step P96 and then, a decision is made at step P97 as to whether or not the next character M-(i) of the document is one of the blank codes. In the case of "YES" at step P97, the program flow returns to step P96. In the case of "NO" at step P97, the program flow returns to step P90. By a loop flowing between steps P92 and P97, the blank codes such as the space codes, the tabulation codes, the line feed codes, etc. are reduced, in length, to one space. Thus, even if the document has many blank codes, its title can be efficiently registered. By employing this automatic registration of the document title, it becomes possible to edit the documents sequentially without the need for storing the documents in the diskette.

(e) Example of automatic registration of document title

Hereinbelow, one example of automatic registration of the document title will be described. Fig. 6 shows one example of the document which is being produced on the CRT screen 102. The document input from the keyboard 500 is displayed in the frame 104. At the left end of the frame 104, a scale 110 for indicating vertical positions of lines is displayed. Numerals of the scale 110 express, in inches, distances from the upper end of the scale 104, respectively. A mark 112 points to a line at which the cursor 103 is positioned. In the case where the key input is applied to the keyboard 500 by single line spacing, six lines can be input in one inch.

At the upper end of the frame 104, there are displayed characters "Untitled" for indicating that the inputted document is a new document and is untitled and characters "Page 1 Line 12" for indicating the position of the cursor 103. Furthermore, at the lower end of the frame 104, a scale 114 for indicating sidewise positions of lines is displayed. A date is displayed below the scale 114.

In the example shown in Fig. 6, the contents "ABC ... XYZ 1 2 3 4 5 6 7 8 9 0" are identically inputted to lines 7 to 11 tentatively at step P11 (Fig. 4) and the cursor 103 is positioned at the ninth character of line 12.

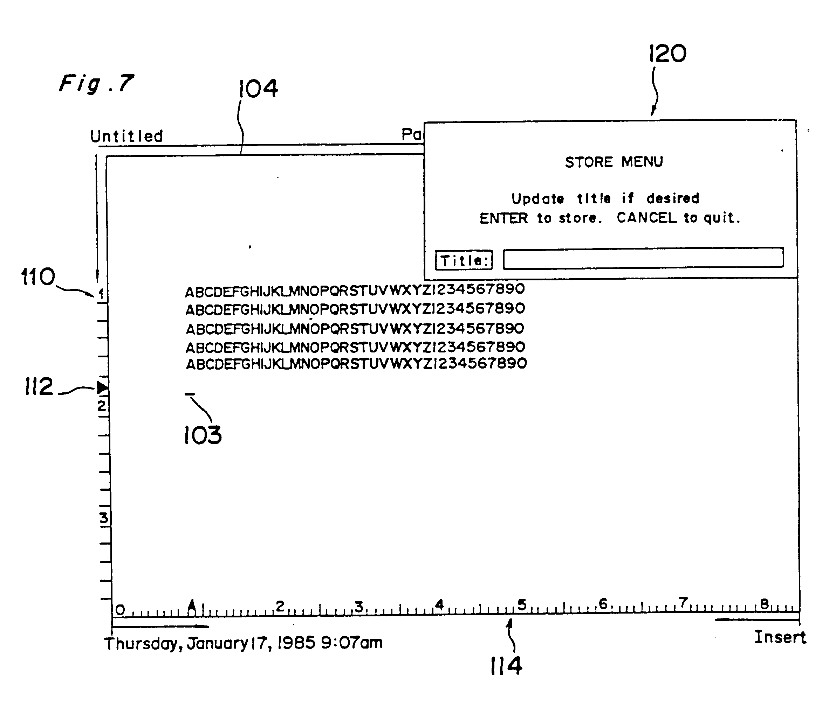

If the document storage key 526 is depressed in this state at step P1 or P10, the document title should be inputted to the keyboard 500 at step P20. At this time, a menu 120 for document storage is displayed on the CRT screen 102 as shown in Fig. 7 so as to indicate the next operation.

When the Enter key 545 is depressed immediately in this state at step P50 or P51 (Fig. 5), the document title is automatically produced from the document at step P31 (Fig. 4) since it is found at step P30 that the document is a new document. Namely, 33 characters starting from the character A, which is positioned at the ninth character of line 7 as the first character of the document, are inputted to the title buffer T and the title automatically produced from the document is registered in the directory at step P22. Then, the inputted document is stored in the floppy disk at step P23.

Subsequently, when the Files key 542 is depressed at step P1 or P2, a table showing titles (indicated by a mark

" ⌐⌐ "

) of the independent documents and titles (indicated by a mark

" ▭ "

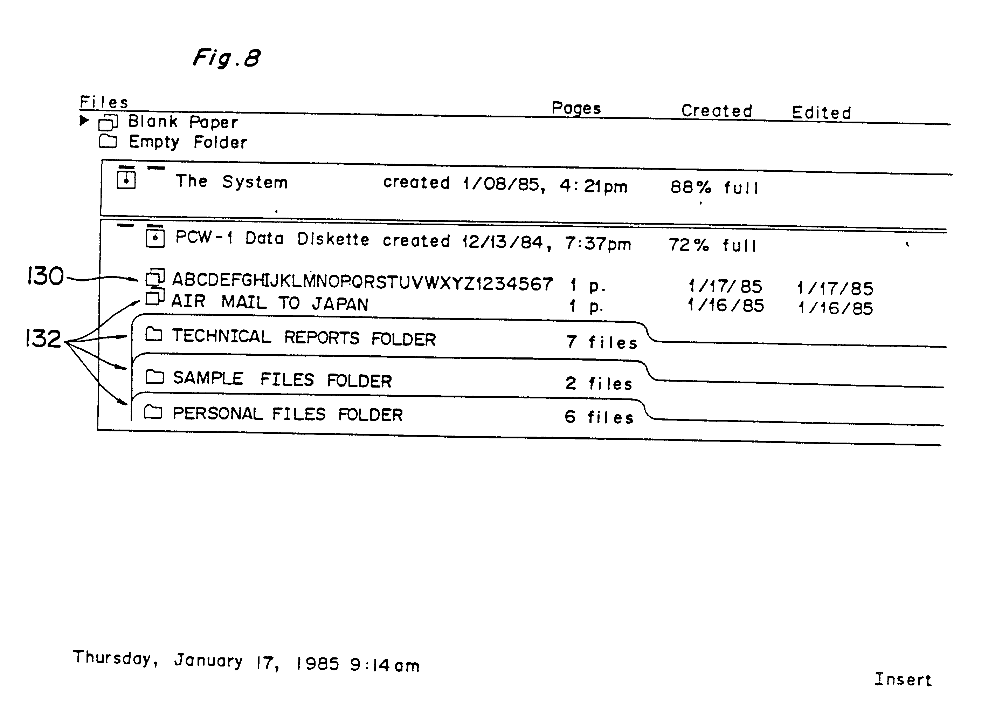

) of the folders is displayed on the CRT screen 102 as shown in Fig. 8. At this time, a title 130 of the document which has been newly registered in the directory is displayed above titles 132 of the independent documents and the folders which have already been registered in the directory.

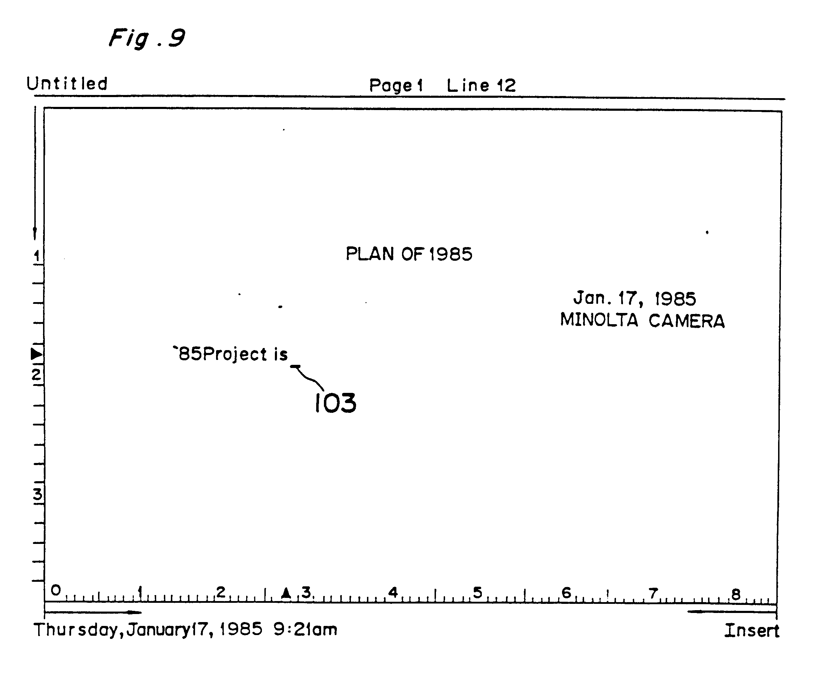

Then, another example of automatic production of the document title will be described. Fig. 9 shows another document displayed on the CRT screen 102. In Fig. 9, at page 1, character strings "PLAN OF 1985", "Jan. 17, 1985", MINOLTA CAMERA and "'85 Project is" are, respectively, input to lines 7, 9, 10 and 12. The cursor 103 is positioned at line 12.

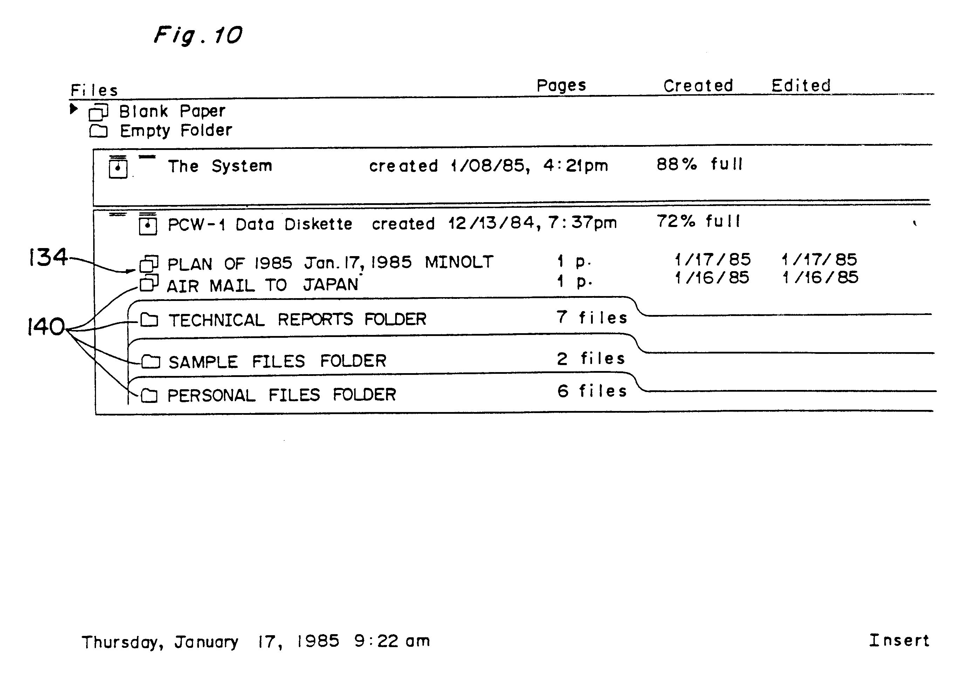

When the document storage key 526 is depressed and then, the Enter key 545 is depressed, the document title is automatically produced. The result is displayed by an uppermost title 134 of the Files screen of Fig. 10. In this case, the newly produced title includes 33 characters ranging from the first character "P" of line 7 to the character "T" of line 10 in Fig. 9. Space codes occurring up to the first character "P" of line 7 are omitted. It is to be noted that space codes and line feed codes occurring from the numeral "5" of line 7 to the character "J" of line 9 in Fig. 9 are reduced, in length, to one space. Likewise, space codes and line feed codes occurring from the numeral "5" of line 7 to the character "J" of line 9 in Fig. 9 are reduced, in length, to one space. Thus, the document title can be efficiently registered in the directory.

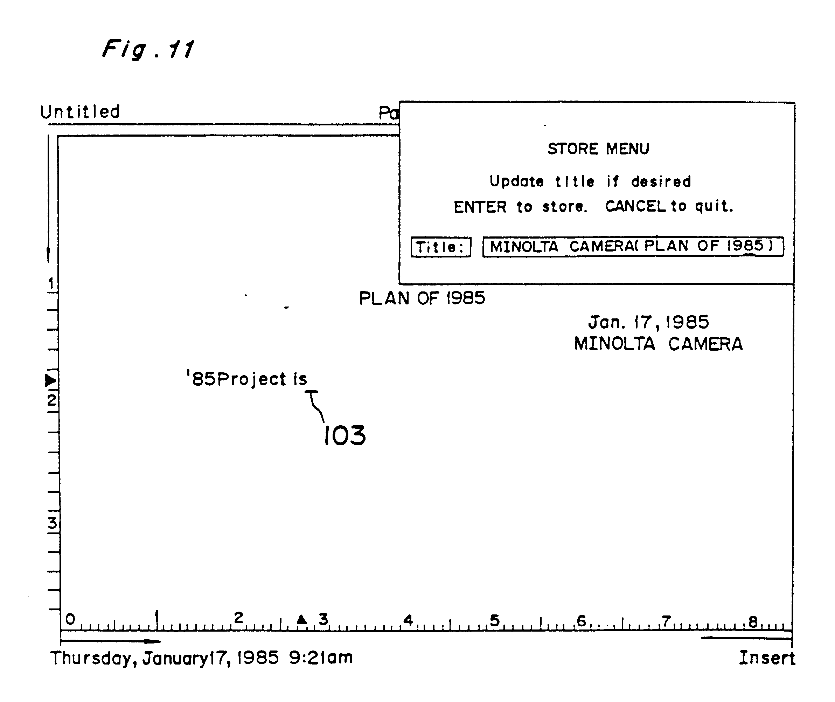

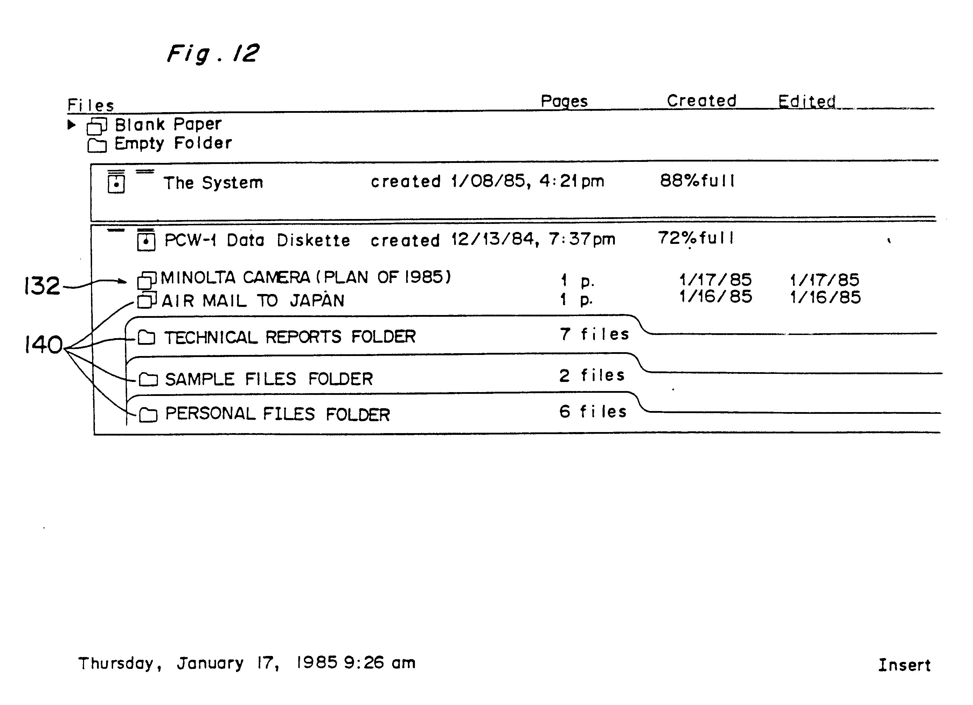

As still another example, input of the title of the new document will be described, hereinbelow. After the document shown in Fig. 7 has been produced, the document storage key 526 is depressed and then, the title is inputted from the keyboard 500 at steps P60 to P61. Thereafter, when the Enter key 545 is depressed at step P50 or P51, the inputted title is registered. In Fig. 11, for example, the title "MINOLTA CAMERA (PLAN OF 1985)" is inputted. Subsequently, when the Files key 542 is depressed, the title 132 registered in the Files screen of Fig. 12 is displayed on the CRT screen 102.

In accordance with the present invention, it becomes possible to eliminate the need for inputting the titles at the time of production of the documents in the word processor. Meanwhile, in accordance with the present invention, the documents can be edited sequentially without the need for inputting the titles.

Furthermore, in accordance with the present invention, since codes other than the first character of the document are neglected and the blank codes between characters are reduced, in length, to one space, the titles of even the documents having a number of blanks, for example, letters can be efficiently registered in the directory.

Moreover, in accordance with the present invention, such a problem can be eliminated that the documents are not stored in the floppy disk due to the operator's failure of inputting the titles.

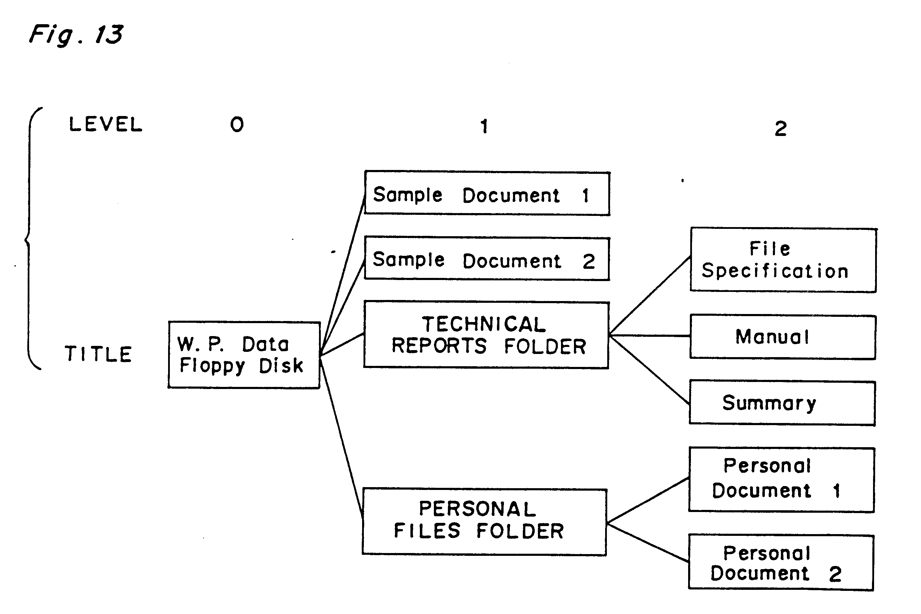

Hereinbelow, a modification of the present invention will be described in the sequence of (a) Configuration of word processor, (b) Configuration of host computer, (c) Document control, (c') Display of document table (Files screen), (d) Automatic registration of document title and (e) Example of automatic registration of document title with reference to Figs. 13 to 15. Since the items (a), (b) and (e) are the same as those referred to above, only the items (c), (c') and (d) are described below.

(c) Document control

A directory for controlling the stored documents is stored in each diskette. A title, a level (a hierarchy of a tree structure of each document), the number of the contents (the number of pages), a date of production and a date of updating of each document, an access data for the directory file for storing the documents, etc. are recorded in the directory file.

Display of document names on the CRT screen 102 will now be described by way of an example wherein a tree structure is composed of such document names as shown in Fig. 13.

In this example, a diskette having a diskette name, PCW-1 Data Diskette, has seven documents stored therein (which documents bear respective document names, Sample Document 1, Sample Document 2, File Specification, Manual, Summary, Personal Document 1, and Personal Document 2). Means for dividing into a unit a group of documents comprising a plurality of documents to be bundled is herein referred to as a folder. In this example, the three documents, File Specification, Manual and Summary, belong to a folder named TECHNICAL REPORTS FOLDER, and the two documents (Personal Document 1 and Personal Document 2) belong to a folder named PERSONAL FILES FOLDER. In the tree structure, the independent documents, Sample Document 1 and Sample Document 2, lay in the same level as the two folders, TECHNICAL REPORTS FOLDER and PERSONAL FILES FOLDER.

A directory of diskettes stores data of the documents stored, so that they can be displayed in the form of a table. The data are stored in a unit (shown by one horizontal line) composed of columns for type, level, file name, title, number of contents, date of composition, date of renewal and others.

Where the type column is C, D and F, it means that a single line recording is carried out for each of the diskette, the document and the folder. The level column represents the level in the tree structure. The file name column represents the name (file name) in the diskette for each document. The title column gives the name of the diskette, the name of the document and the name of the folder. The content number column is shown with the storage capacity (%) of the diskette being used and in the case of the document and the folder, the number of pages and the number of document stored are respectively shown. The date-of-composition column and the date-of-renewal column are shown with the date an the time, respectively, of composition of a directory file in the case of the diskette, and with the date and the current renewal date, respectively, of composition in the case of the document.

Table 1

| Type | Level | File Name | Title | Content Nos. | Date of Composition | Date of Renewal |
|---|---|---|---|---|---|---|
| C | 0 | . | PCW-1 Data Diskette | 22 | 12/13/84 | 7:37 pm |
| D | 1 | 1 U 041 AN | Sample Document 1 | 5 | 12/14/84 | 1/11/85 |
| D | 1 | 1 U 041 CE | Sample Document 2 | 4 | 1/17/85 | 1/17/85 |
| F | 1 | | TECHNICAL REPORTS FOLDER | 3 | | |
| D | 2 | 1 U 041 EO | File Specification | 3 | 12/14/84 | 1/17/85 |
| D | 2 | 1 U1 J 036 | Manual | 2 | 1/14/85 | 1/16/85 |
| D | 2 | 1 U 041 D5 | Summary | 3 | 12/14/84 | 1/11/85 |
| F | 1 | | PERSONAL FILES FOLDER | 2 | | |
| D | 2 | 1 UO J 2FG | Personal Document 1 | 1 | 12/13/84 | 12/20/84 |
| D | 2 | 1 UO J 2FI | Personal Document 2 | 1 | 12/13/84 | 1/19/85 |

(c') Display of document table (Files screen)

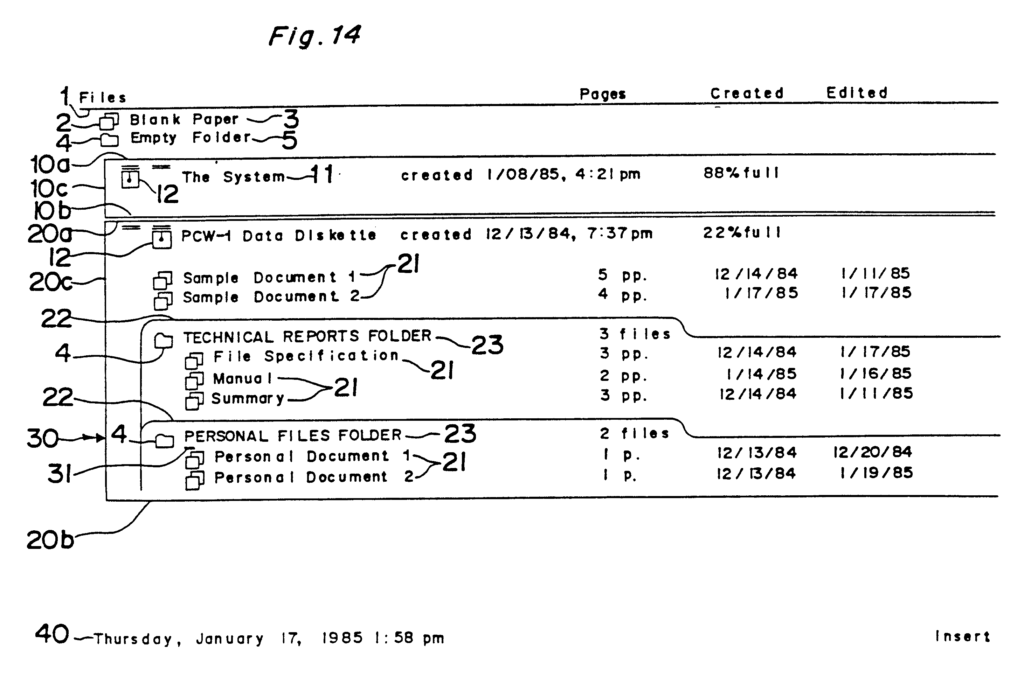

When the Files key 542 is depressed, a list of document names and folder names (hereinafter referred to as a document list or files screen) can be displayed on the CRT screen 102 as shown in Fig. 14.

9

At the first line on the screen (the line number being shown at the rightmost part of Fig. 14 for better understanding), the name of the column (Files, Pages, Created and Edited) is displayed above the underline 1. In the column of Files, the contents of the type column, the level column and the title column of the directory are displayed. In each of the Pages column, the Created column and the Edited column, the contents of the content number column, the date-of-composition column and the date-of-renewal column are displayed.

At the second line, both a

symbol 2 and a name "Blank Paper" 3 are displayed. The

symbol 2 indicates that the name following the symbol is the name of a document. As will be described later, this document is used when a document having no content is to be composed.

At the third line, both a

symbol 4 and a name "Empty Folder" 5 are displayed. The

symbol 4 indicates that the name following the symbol is the name of the folder. As will be described later, this folder is used when a folder having no content is to be composed.

At the fifth line separated from a line 10a at the fourth line, the name 11 of the system disk of the word processor system inserted in the left-hand disk drive unit 301, the hour of use and the percentage of the memory used are displayed. A

symbol 12 indicates that the name following this symbol is the name of the diskette. The display is separated by the line 10b (the seventh line) below a blank line. Lines 10a and 10b at the fourth and seventh lines are connected together by a vertical line 10c at the left side.

After another line 20a at the seventh line, each of the lines following the eighth line inclusive is used to display the contents corresponding to a respective line of the contents of the directory shown in Table 1. At the eighth line, and following the

symbol 12 at the right-hand position indicating the diskette (type C) inserted in the right-hand disk drive unit 302, the diskette name, the date of composition, the hour of composition and the percentage of the memory used are successively displayed. At the tenth and eleventh lines following a blank line, the document names 21, the number of pages, the dates of composition and the dates of renewal of the respective documents, Sample Document 1 and Sample Document 2 are displayed. A line 22 extending in the leftmost and central portions of the twelfth line and in the rightmost portion of the thirteenth line and further extending downwards from the leftmost portion of the twelfth line so as to depict a contour similar to the shape of an upped edge of an actually existing paper folder indicates that the information displayed below such line 22 is the contents of the folder. The thirteenth line displays both the folder name 23 (TECHNICAL REPORTS FOLDER) and the number of documents contained in this folder. From the fourteenth line to the sixteenth line, the document frames 21 (shown as rightwardly indented sequentially since the level is displaced one line below), the numbers of pages, the dates of composition, and the dates of renewal of the respective documents belonging to this folder are displayed.

Similarly, the presence between the seventh and eighteenth lines of a line 22 shaped so as to represent the contour of the upper edge of another actually existing paper folder indicates that the information therebelow represents the contents of the folder (the vertical components of the two lines 22 being connected together at the right-hand side). At the eighteenth line, both the folder name PERSONAL FILES FOLDER and the number of documents contained in this folder are displayed. At the nineteenth and twentieth line, the dates of composition and the dates of renewal of the respective documents belonging to this folder are displayed.

At the twenty-first line, a line 20b is displayed. This line 20b is connected at a left-hand portion with the second line at the seventh line through a vertical line 20c to indicate that the display associated with all of the documents has been made.

A cursor position indicator 30 represented by a marking

▶

shown at the leftmost margin indicates the line at which the cursor 31 is located. The last line (a prompt line) 40 of the screen provides a display of advice made to the operator.

Since, as hereinabove described, the files screen is associated with the type of the directory, the level, the title, the number of contents, the date of composition and the date of renewal, the contents of the directory files can be renewed by editing on the screen in a manner which will now be described. It is, however, to be noted that, where all cannot be displayed on the same screen because of too many documents, they can be displayed when they are scrolled up and down by operating the cursor keys 531.

(d) Automatic registration of document title

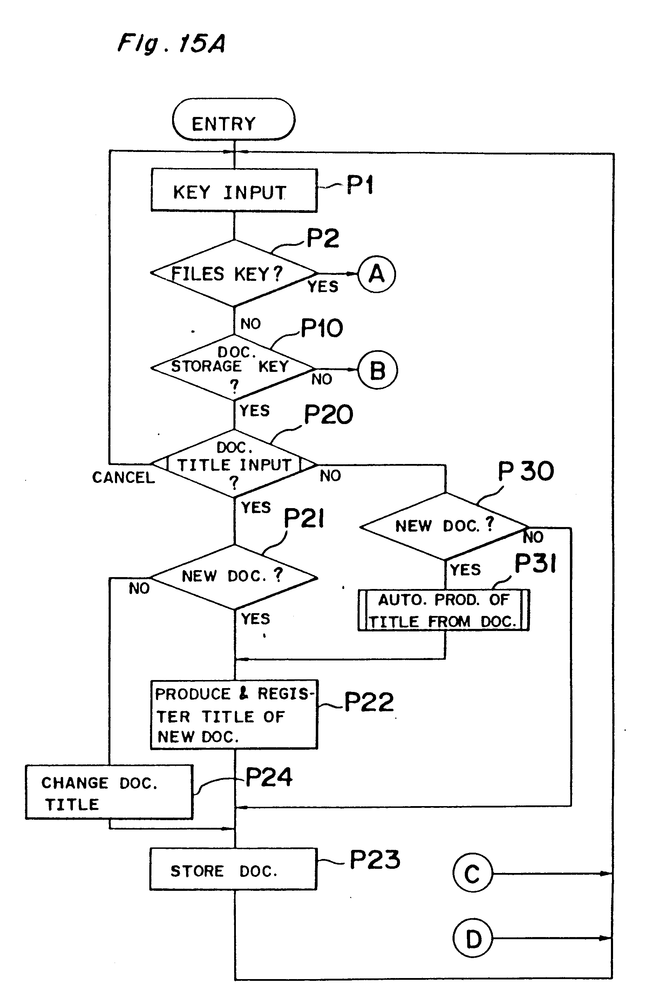

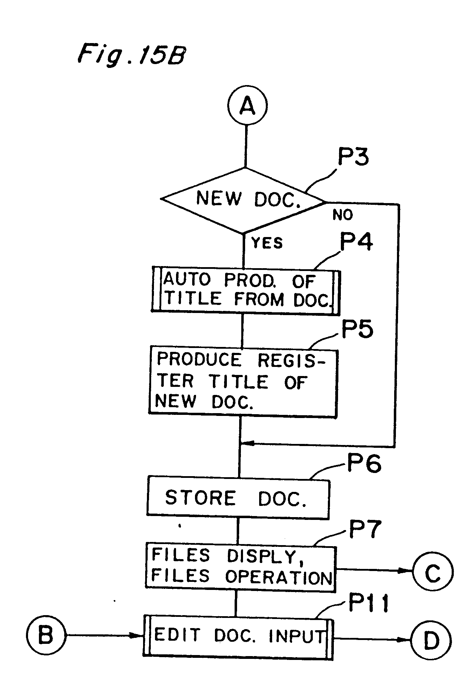

When the documents are input to the word processor K, the CPU 204 performs various processings in accordance with the contents of the storage area of the RAM/ROM memory 202 for storing the screen editing routine. In connection with automatic registration of the document title, the processing of inputting the documents to the word processor K will be described with reference to flowcharts of Figs. 15A and 15B, hereinbelow.

When a key input is applied to the keyboard 500 at step P1, a decision is made at step P2 as to whether or not the Files key 542 has been depressed. In the case of "YES" at step P2, a decision is made at step P3 as to whether or not the document is a new document. In the case of "YES" at step P3, a title is automatically produced from the document at step P4 and the program flow proceeds to step P5. Since the title is produced from an initial sentence of the document at this time, the title clearly reminds an operator of contents of the document even after a long time. Meanwhile, even if the operator fails to input the title of the document, the document is not erased. In the case of "NO" at step P3, the title has been registered and thus, step P6 follows in which the document is stored. Subsequently, a table (Files screen) showing the documents stored in a recording mediam (diskette) in use is displayed on the CRT screen 102 and sorting of the documents, etc. are performed if necessary at step P7.

In the case of "NO" at step P2, a decision is made at step P10 as to whether or not the document storage key 526 has been depressed. In the case of "NO" at step P10, since characters, etc. of a document have been input to the keyboard 500, the document input is edited at step P11. In the case of "YES" at step P2, the document title is produced if necessary and then, is registered in the directory such that the document is stored in the floppy disk in the following procedure. Namely, the document title is input to the keyboard 500 at step P20. Then, a decision is made at step P21 as to whether or not the document is a new document, namely, whether or not the title has been registered in the directory. In the case of "YES" at step P21, the title of the new document is produced so as to be registered in the directory at step P22. Thereafter, the document is stored in the floppy disk P23 and then, the program flow returns to step P1 in a waiting state for waiting for the next key input. In the case of "NO" at step P21, the title of the document is changed at step P24 and then, the document is stored in the floppy disk at step P23. Meanwhile, when the Cancel key 536 has been depressed during input of the document title, input of the document title is suspended and then, the program flow returns to step P1 in the waiting state for waiting for the next key input.

Thereafter, in the case of "NO" at step P20, a decision is made at step P30 as to whether or not the document is a new document. In the case of "YES" at step P30, a title is automatically produced from the document at step P31 and then, step P22 follows. Since the title is produced from a top sentence of the document at this time, one will be able to easily recall the contents of the document when he would look at the title later. Furthermore, even if he fails to input the document title, the document is not erased. In the case of "NO" at step P30, since the document title has been already registered, the program flow proceeds to step P23 for storing the document in the floppy disk.

As one example, a case will be described with reference to Figs. 15A and 15B, hereinbelow in which the documents are automatically registered and stored by depressing the Files key 542 after editing of the document input at step P11. When the Files key 542 is depressed at step P2 after the document of Fig. 9 has been produced newly, it is found at step P3 that the document is a new document. Thus, the title of the new document is automatically produced from the new document at step P4 and then, is produced and registered in the directory at step P5. Subsequently, after the document has been stored at step P6, the document table of Fig. 10 is finally displayed at step P7. By these operations, it becomes possible to efficiently repeat production, editing and storage of the documents, display of the document table and operation of the command means.

In accordance with the modification of the present invention, by solely operating the command means for giving a command of completion of production and editing of the documents or a command of execution of predetermined operations associated with the completion of production and editing of the documents, for example, display of the table of the document titles, the title of the new document is automatically produced and the document can be registered and stored. Since the new document under editing is automatically stored by the above described operation, working efficiency of the word processor is improved.

## Claims

1.  A word processor (k) comprising a computer processing unit and having a key input means (500) for inputting data including but not limited to characters; a document processing means (200) for producing documents in accordance with the data inputted from said key input means, storing document data corresponding to the documents in a recording medium, and outputting the document data for making copies of the documents; and a screen display means (100) for displaying the documents produced by said document processing means; said document processing means storing document control data including titles of the documents in accordance with data from said key input means in the recording medium for accessing the documents, **characterized in that** said document processing means (200) comprises a file denominating string producing means (204), used as title producing means for picking out of a character string which occupies a predetermined portion of the document a title character string which is limited to a predetermined number of title characters, and stores the title character string picked by said title producing means in the recording medium as a title of the document when no title is inputted from said key input means.

2.  A word processor as claimed in claim 1, wherein said character string starts from the first character of said untitled document.

3.  A word processor as claimed in claim 1 or 2, wherein said file denominating string producing means (204) reduces, in length to one print space, data obtained by excluding said title characters different from print spaces from said character string.

4.  A word processor as claimed in any one of claims 1 to 3, wherein said key input means (500) includes a document storage command means for giving a command of storing said documents in said recording medium such that said document storage command means is operatively associated with said file denominating string producing means (204), whereby when said document processing means has made, in response to said command from said document storage command means, a decision that the document to be stored in said recording medium is an untitled document, said document processing means causes said file denominating string producing means to produce said title of said untitled document.

## Revendications

1.  Appareil de traitement de texte (K) comprenant une unité de traitement à ordinateur et ayant un dispositif de saisie à touches (500) destiné à la saisie de données comprenant des caractères mais non limitées à ceux-ci, un dispositif de traitement de documents (200) destiné à produire des documents en fonction des données saisies à l'aide du dispositif de saisie à touches, à mémoriser des données de documents correspondant à des documents sur un support d'enregistrement et à transmettre les données de documents pour la formation de copies de documents, et un dispositif d'affichage (100) à écran destiné à afficher les documents produits par le dispositif de traitement de documents, le dispositif de traitement de documents conservant des données de commande de documents comprenant des titres de documents en fonction des données provenant du dispositif de saisie à touches, sur le support d'enregistrement, afin que l'accès aux documents soit permis, caractérisé en ce que le dispositif de traitement de documents (200) comprend un dispositif (204) de production d'une chaîne de dénomination de fichier, utilisé comme dispositif de production d'un titre qui prélève une chaîne de caractères qui occupe une partie prédéterminée du document, formant une chaîne de caractères de titre qui est limitée à un nombre prédéterminé de caractères de titre, et qui mémorise la chaîne de caractères de titre prélevée par le dispositif de production de titre sur le support d'enregistrement comme titre du document lorsqu'aucun titre n'est saisi à l'aide du dispositif de saisie à touches.

2. Appareil de traitement de texte selon la revendication 1, dans lequel la chaîne de caractères commence à partir du premier caractère du document sans titre.

3. Appareil de traitement de texte selon la revendication 1 ou 2, dans lequel le dispositif (204) de production d'une chaîne de dénomination de fichier réduit à la longueur d'un espace d'impression des données obtenues par exclusion des caractères de titre différents des espaces d'impression provenant de la chaîne de caractères.

4. Appareil de traitement de texte selon l'une quelconque des revendications 1 à 3, dans lequel le dispositif de saisie à touches (500) comporte un dispositif de commande de mémorisation de document destiné à transmettre une commande de mémorisation des documents sur le support d'enregistrement afin que le dispositif de commande de mémorisation de document soit associé au dispositif (204) de production de chaîne de dénomination de fichier, si bien que, lorsque le dispositif de traitement de texte a décidé, à la suite de la commande du dispositif de commande de mémorisation de documents, que le document à mémoriser sur le support d'enregistrement était un document sans titre, le dispositif de traitement de documents provoque, par le dispositif de production d'une chaîne de dénomination de fichier, la création du titre du document sans titre.

## Patentansprüche

1. Wortprozessor (k) mit einer Computer-Prozessoreinheit mit einer Tasteneingabeeinrichtung (500) zum Eingeben von Daten einschließlich Zeichen, aber nicht auf diese beschränkt; einer Textverarbeitungseinrichtung (200) zur Herstellung von Texten gemäß den über die Tasteneingabeeinrichtung angegebenen Daten, zum Speichern der den Texten entsprechenden Daten auf einem Aufzeichnungsmedium und zum Ausgeben der Textdaten zur Erstellung von Kopien der Texte und einer Bildschirmanzeigeeinrichtung (100) zum Anzeigen der durch die Textverarbeitungseinrichtung erstellten Texte, wobei die Textverarbeitungseinrichtung Textsteuerdaten einschließlich Titel der Texte entsprechend Daten von der Tasteneingabeeinrichtung auf dem Aufzeichnungsmedium zum Zugriff auf die Texte speichert, dadurch **gekennzeichnet,** daß die Textverarbeitungseinrichtung (200) eine Zeilenbenennungsfolgen-Erzeugereinrichtung (204) aufweist, die als Titelerzeugungseinrichtung verwendet wird, zum Aufnehmen einer Titelzeichenfolge aus einer Zeichenfolge, die einen vorgegebenen Bereich des Textes besetzt, wobei die Titelzeichenfolge auf eine vorgegebene Anzahl von Titelzeichen begrenzt ist, und zum Speichern der Titelzeichenfolge, die durch die Titelerzeugungseinrichtung augenommen wurde, in dem Speichermedium als Titel des Textes, wenn kein Titel durch die Tasteneingabeeinrichtung eingegeben wird.

2. Wortprozessor nach Anspruch 1, wobei die Zeichenfolge am ersten Zeichen des unbetitelten Textes beginnt.

3. Wortprozessor nach Anspruch 1 oder 2, wobei die Dateibenennungsfolge-Erzeugungseinrichtung (204) Daten, die durch Ausschluß von Titelzeichen, die keine Druckzeichen sind, aus der Zeichenfolge erhalten werden, in der Länge auf ein Druckzeichen reduziert.

4. Wortprozessor nach einem der Ansprüche 1 bis 3, wobei die Tasteneingabeeinrichtung (500) eine Textspeicher-Befehlseinrichtung zum Eingeben eines Befehls zur Speicherung des Textes auf dem Aufzeichnungsmedium aufweist, so daß die Textspeicher-Befehlseinrichtung operativ der Dateibenennungsfolge-Erzeugungseinrichtung (204) zugeordnet ist, wodurch, wenn die Textverarbeitungseinrichtung in Abhängigkeit von dem Befehl der Textspeicher-Befehlseinrichtung eine Entscheidung getroffen hat, daß der in dem Aufzeichnungsmedium zu speichernde Text ein unbetitelter Text ist, die Textverarbeitungseinrichtung die Dateibenennungsfolgen-Erzeugungseinrichtung veranlaßt, den Titel des unbetitelten Textes zu erstellen.

## FIG. 1

Fig. 2

## Fig. 3

```
                    ┌─────────┐
                    │  ENTRY  │
                    └─────────┘
                         │
                       ╱ P1 ╲            ┌──────────────┐
                      ╱ ANY  ╲   NO      │   DISPLAY    │  F2
                      ╲ TEXT? ╱─────────▶│ "BLANK PAPER"│
                       ╲     ╱           └──────────────┘
                        ╲ YES
                         │
                       ╱ P3 ╲            ┌──────────────┐
                      ╱ DOC.  ╲   NO     │   DISPLAY    │
                      ╲ TITLED?╱────────▶│  "UNTITLED"  │
                       ╲      ╱          └──────────────┘
                        ╲ YES                  P5
                         │
              ┌────────────────────┐ P4
              │ DISPLAY DOC. TITLE │
              └────────────────────┘
                         │
              ┌────────────────────┐
              │     KEY INPUT      │ P6
              └────────────────────┘
                         │
                       ╱ P7 ╲            ┌──────────────────┐ P8
                      ╱ FILES ╲   YES    │ FILES DISPLAY,   │
                      ╲ KEY?   ╱────────▶│ FILES OPERATION  │
                       ╲      ╱          └──────────────────┘
                        ╲ NO
                         │
                       ╱ P10 ╲           ┌──────────────────┐ P11
                      ╱ DOC.   ╲  NO     │ ENTER DOC. INPUT │
                      ╲ STORAGE ╱───────▶│                  │
                       ╲ KEY?  ╱         └──────────────────┘
                        ╲ YES
                         │
                       ╱ P20 ╲
             CANCEL    ╱ DOC.  ╲  NO              ╱ P30 ╲
          ◀──────────╱  TITLE   ╲───────────────╱CURRENTLY╲  NO
                     ╲  INPUT?  ╱                ╲UNTITLED?╱────▶
                      ╲        ╱                  ╲       ╱
                       ╲ YES                       ╲ YES
                         │                       ┌──────────────┐ P31
                         │                       │ AUTO. PROD. OF│
                         │                       │TITLE FROM DOC.│
                         │                       └──────────────┘
                         │◀──────────────────────────┘
                       ╱ P21 ╲
              NO      ╱ NEW   ╲
          ◀─────────╱  DOC. ?  ╲
                     ╲        ╱
                      ╲ YES
                       │
            ┌──────────────────┐ P22
            │ REGISTER TITLE   │
            │  OF NEW DOC.     │
            └──────────────────┘
       P24            │
  ┌──────────────┐    │
  │ CHANGE DOC.  │    │
  │   TITLE      │    │
  └──────────────┘    │
         │            │ P23
  ┌──────────────────┐
  │   STORE DOC.     │
  └──────────────────┘
```

Fig. 4

18

*Fig. 5*

ENTRY

P40 — CURRENTLY UNTITLED ? — NO → P41 TITLE BUFFER ← CURRENT TITLE

YES

P42 BLANK TITLE BUFFER

P43 j = 1

P50 KEY INPUT

P51 ENTER KEY? — NO

YES

P52 j > 1 ? — NO → NO EXIT

YES → YES EXIT

P53 CANCEL KEY ? — YES → CANCEL EXIT

NO

P60 BACK SPACE KEY ? — YES → P61 j > 1 ? — NO → GENERATION OF ERROR SOUND

YES → P62 j = j − 1

P63 T(j) = SPACE

NO

P64 CHAR. OR BLANK CODE ? — NO

YES

P66 j ≦ N ? — NO

YES

P67 T(j) = KEY INPUT

P68 j = j + 1

P65 GENERATION OF ERROR SOUND

EP 0 204 147 B1

EP 0 204 147 B1

*Fig.6*

Untitled                                    Page1   Line 12

ABCDEFGHIJKLMNOPQRSTUVWXYZ1234567890
ABCDEFGHIJKLMNOPQRSTUVWXYZ1234567890
ABCDEFGHIJKLMNOPQRSTUVWXYZ1234567890
ABCDEFGHIJKLMNOPQRSTUVWXYZ1234567890
ABCDEFGHIJKLMNOPQRSTUVWXYZ1234567890

0        1        2        3        4        5        6        7        8

Thursday, January 17, 1985 9:07am                                    Insert

104   120   110   112   103   114

Fig.7

120

104

Untitled

Pa

STORE MENU

Update title if desired
ENTER to store.  CANCEL to quit.

Title:

ABCDEFGHIJKLMNOPQRSTUVWXYZ1234567890
ABCDEFGHIJKLMNOPQRSTUVWXYZ1234567890
ABCDEFGHIJKLMNOPQRSTUVWXYZ1234567890
ABCDEFGHIJKLMNOPQRSTUVWXYZ1234567890
ABCDEFGHIJKLMNOPQRSTUVWXYZ1234567890

103

110

112

114

Thursday, January 17, 1985 9:07am

Insert

## Fig.8

| Files | Pages | Created | Edited |
|---|---|---|---|
| ▶ ⬜ Blank Paper | | | |
| ⬜ Empty Folder | | | |

| ⬒ The System | created 1/08/85, 4:21pm | 88% full | |

| ⬒ PCW-1 Data Diskette created 12/13/84, 7:37pm | | 72% full | |

130 ⟶ ⬜ ABCDEFGHIJKLMNOPQRSTUVWXYZ1234567    1 p.      1/17/85    1/17/85

         ⬜ AIR MAIL TO JAPAN             1 p.      1/16/85    1/16/85

132 ⟶ 📁 TECHNICAL REPORTS FOLDER       7 files

         📁 SAMPLE FILES FOLDER       2 files

         📁 PERSONAL FILES FOLDER       6 files

Thursday, January 17, 1985 9:14 am

Insert

EP 0 204 147 B1

## Fig .9

PLAN OF 1985

Jan. 17, 1985
MINOLTA CAMERA

`85Project is

103

0    1    2    ▲ 3    4    5    6    7    8

Thursday, January 17, 1985  9:21am                                    Insert

## Fig.10

| Files | Pages | Created | Edited |
|---|---|---|---|
| ▶ 🗇 Blank Paper | | | |
| 🗀 Empty Folder | | | |

| | | | | |
|---|---|---|---|---|
| 🖬 — The System | created 1/08/85, 4:21pm | 88% full | | |

| | | | | |
|---|---|---|---|---|
| 🖬 PCW-1 Data Diskette | created 12/13/84, 7:37pm | 72% full | | |
| 134 → 🗇 PLAN OF 1985 Jan.17,1985 MINOLT | 1 p. | 1/17/85 | 1/17/85 |
| 🗇 AIR MAIL TO JAPAN | 1 p. | 1/16/85 | 1/16/85 |
| 140 — 🗀 TECHNICAL REPORTS FOLDER | 7 files | | |
| 🗀 SAMPLE FILES FOLDER | 2 files | | |
| 🗀 PERSONAL FILES FOLDER | 6 files | | |

Thursday, January 17, 1985 9:22 am                    Insert

EP 0 204 147 B1

Fig. 11

Untitled                                    Pa

Untitled

STORE MENU

Update title if desired

ENTER to store.   CANCEL to quit.

Title:   MINOLTA CAMERA( PLAN OF 1985 )

PLAN OF 1985

Jan. 17, 1985
MINOLTA CAMERA

1

'85 Project is

2

103

3

0 ₁₁₁ı.ı₁ 1 ₁₁ı.ı₁ı 2 ₁.ı ▲ 3 ₁.₁ı₁ 4 ₁.₁ı 5 ₁.ı₁ 6 ₁.ı₁ 7 ₁.₁ı₁ 8 ₁ı₁

Thursday, January 17, 1985  9:21am                                    Insert

EP 0 204 147 B1

## Fig. 12

| Files | Pages | Created | Edited |
|---|---|---|---|
| ▶ 🗇 Blank Paper | | | |
| 🗀 Empty Folder | | | |

| | | | |
|---|---|---|---|
| 🔲 The System | created 1/08/85, 4:21pm | 88%full | |

| | | | |
|---|---|---|---|
| 🔲 PCW-1 Data Diskette created 12/13/84, 7:37pm | 72%full | | |
| 132 → 🗇 MINOLTA CAMERA (PLAN OF 1985) | 1 p. | 1/17/85 | 1/17/85 |
| 🗇 AIR MAIL TO JAPAN | 1 p. | 1/16/85 | 1/16/85 |
| 140 🗀 TECHNICAL REPORTS FOLDER | 7 files | | |
| 🗀 SAMPLE FILES FOLDER | 2 files | | |
| 🗀 PERSONAL FILES FOLDER | 6 files | | |

Thursday, January 17, 1985 9:26 am                    Insert

EP 0 204 147 B1

Fig. 13

LEVEL    0    1    2

TITLE

W. P. Data Floppy Disk

Sample Document 1
Sample Document 2
TECHNICAL REPORTS FOLDER
PERSONAL FILES FOLDER

File Specification
Manual
Summary
Personal Document 1
Personal Document 2

## Fig.14

| Files | Pages | Created | Edited |
|---|---|---|---|
| Blank Paper — 3 | | | |
| Empty Folder — 5 | | | |
| The System — 11 | created 1/08/85, 4:21 pm | 88% full | |
| PCW-1 Data Diskette | created 12/13/84, 7:37 pm | 22% full | |
| Sample Document 1 — 21 | 5 pp. | 12/14/84 | 1/11/85 |
| Sample Document 2 — | 4 pp. | 1/17/85 | 1/17/85 |
| TECHNICAL REPORTS FOLDER — 23 | 3 files | | |
| File Specification — 21 | 3 pp. | 12/14/84 | 1/17/85 |
| Manual — 21 | 2 pp. | 1/14/85 | 1/16/85 |
| Summary — 21 | 3 pp. | 12/14/84 | 1/11/85 |
| PERSONAL FILES FOLDER — 23 | 2 files | | |
| Personal Document 1 — 21 | 1 p. | 12/13/84 | 12/20/84 |
| Personal Document 2 — | 1 p. | 12/13/84 | 1/19/85 |

40 — Thursday, January 17, 1985 1:58 pm                   Insert

EP 0 204 147 B1

## Fig. 15A

*Fig.15B*

(A)

P3

NEW DOC.

NO

YES   P4

AUTO PROD. OF
TITLE FROM DOC.

P5

PRODUCE REGIS-
TER TITLE OF
NEW DOC.

P6

STORE   DOC.

P7

FILES  DISPLY,
FILES  OPERATION      (C)

P11

(B) → EDIT  DOC.  INPUT → (D)